# EUROPÄISCHE PATENTSCHRIFT

(11) **EP 1 227 562 B1**
(45) Veröffentlichungstag und Bekanntmachung des Hinweises auf die Patenterteilung: **06.11.2013**
(21) Anmeldenummer: 01102044.3
(22) Anmeldetag: 30.01.2001
(51) Int. Cl.: H02H 11/00, H02H 9/04

(54) **Elektrische Schaltung zum Schutz einer an eine Gleichspannungsquelle angeschlossenen elektronischen Einrichtung beim Verpolen der Gleichspannungsquelle**
Electric circuit for protecting an electronic device connected to a dc power supply upon inverted polarity of the supply
Circuit électrique de protection d'un dispositif électronique relié à une source d'alimentation électrique continue contre une inversion de tension

(43) Veröffentlichungstag der Anmeldung: 31.07.2002
(73) Patentinhaber: HKR Seuffer Automotive GmbH & Co. KG, 74635 Kupferzell (DE)
(72) Erfinder: Bass, Wolfgang, 74626 Bretzfeld-Adolzfurt (DE)
(74) Vertreter: Eisenführ, Speiser & Partner

(56) Entgegenhaltungen:
- DE-A- 19 732 094

## Beschreibung

Die Erfindung betrifft eine elektrische Schaltung zum Schutz einer an eine Gleichspannungsquelle angeschlossenen Einrichtung beim Verpolen der Gleichspannungsquelle mit einem beim Verpolen in einen hochohmigen Zustand steuerbaren Halbleiter Bauelement.

Eine derartige elektrische Schaltung ist aus der DE 197 17 527 A1 bekannt. Bei der bekannten Schaltung ist das Halbleiterbauelement ein MOS-Feldeffekttransistor, bei dem die Source-Drain-Strecke in Reihe zwischen einem Ausgang der Versorgungsspannungsquelle und einem Eingang der elektronischen Schaltung geschaltet ist. Beim Verpolen der Versorgungsspannung wird die Source-Drain-Strecke gesperrt. Bei der bekannten elektrischen Schaltung befindet sich der MOS-Feldeffektransistor, welcher den Verpolschutz bildet im Laststromkreis.

Die Druckschrift DE 197 32 094 A1 betrifft eine Steuerschaltung für einen Gleichstrommotor, wobei in der Steuerschaltung Einrichtungen zur Bereitstellung eines Verpolschutzes vorgesehen sind, um eine Zerstörung von Bauelementen bei einer Verpolung der Versorgungsspannung (Gleichspannung) zu verhindern. In dem Freilaufzweig parallel zu einer Last, die im Allgemeinen in Form eines Elektromotors vorgesehen ist, sind eine Freilaufdiode und die Verpolschutzeinrichtung angeordnet. Während im normalen und störungsfreien Betrieb der Halbleiterschalter (Verpolschutztransistor, MOSFET) der Verpolschutzeinrichtung geschlossen und damit leitend ist, sodass die Wirkung der Freilaufdiode nicht beeinträchtigt wird, reagiert bei einer Verpolung der angelegten Gleichspannung (Batteriespannung) die Verpolschutzeinrichtung und ist damit gesperrt, sodass der mögliche Stromweg durch den Freilaufzweig unterbrochen wird.

Aufgabe der Erfindung ist es, eine elektrische Schaltung der eingangs genannten Art derart auszugestalten, dass auch im schlechtesten Betriebsfall die elektronische Schaltung wirksam geschützt wird.

Diese Aufgabe wird erfindungsgemäß durch eine elektrische Schaltung gemäß den Merkmalen des Patentanspruchs 1 gelöst.

Beim Verpolen wird bei der Erfindung ein parallel zum Verbraucher, der extern oder intern induktiv beeinflusst ist, geschaltetes Bauteil oder Bauelement in den hochohmigen Zustand gesteuert, so dass der Strom teilweise oder im Wesentlichen ganz über den Laststromkreis und den Verbraucher fließt.

Hierzu kann ein beim Verpolen in den hochohmigen Zustand steuerbares Halbleiterbauelement in einem Freilaufzweig des von der Gleichspannungsquelle über einen Laststromkreis versorgten und extern oder intern induktiv beeinflussten Verbrauchers geschaltet sein, so dass beim Verpolen der Strom zumindest teilweise über den Verbraucher und den Laststromkreis fließt.

Hierdurch erreicht man einen Verpolschutz für die elektronische Einrichtung, der außerhalb des Laststromkreises liegt.

Für das in den hochohmigen Zustand steuerbare Bauelement, z. B. Halbleiterschalter, kann ein MOS-Feldeffekttransistor oder ein bipolarer Transistor verwendet werden. In seiner einfachsten Ausgestaltung wirkt das Bauelement wie ein steuerbarer Schalter.

### [Beispiele]

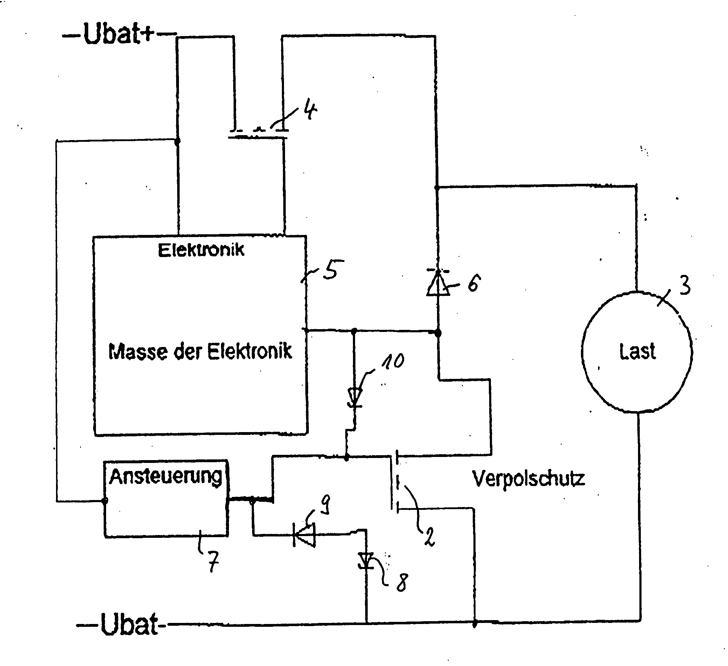

Anhand der Figur wird an einem Ausführungsbeispiel die Erfindung noch näher erläutert.

Das Ausführungsbeispiel der Figur zeigt die Verwendung des Verpolschutzes bei der Stromversorgung eines extern oder intern beeinflussten induktiven Verbrauchers 3. Beim induktiven Verbraucher kann es sich beispielsweise um einen Gleichstrommotor handeln, der einen Ventilator, beispielsweise einer Kühleinrichtung in einem Kraftfahrzeug antreibt. Der Verbraucher kann auch über eine externe Induktivität mit Strom versorgt werden. Die Gleichspannungsquelle Ubat wird von einer Fahrzeugbatterie gebildet. Der Verbraucher 3 wird über einen Laststromschalter 4, welcher von einer elektronischen Einrichtung 5 gesteuert wird, mit Strom versorgt. Beispielsweise kann durch die elektronische Einrichtung 5 eine Drehzahlregelung des als Gleichstrommotor ausgebildeten Verbrauchers 3 durchgeführt werden. Eine derartige Drehzahlsteuerung ist beispielsweise aus der DE 196 30 036 A1 bekannt.

Insbesondere beim Einsatz in einem Kraftfahrzeug besteht die Gefahr des Verpolens der Batteriespannung, welche die Versorgungsspannung für verschiedene elektrische und elektronische Komponenten im Kraftfahrzeug liefert. Beispielsweise durch falsches Anschließen bei einer Fremdstarthilfe, wird die Batteriespannung verpolt. Hieraus ergibt sich die Gefahr der Zerstörung der von der Batteriespannung versorgten elektronischen Einrichtung 5, welche in einem Kraftfahrzeug in aller Regel eine Leistungselektronik darstellt. Zur Erzielung eines Verpolschutzes ist in einen eine Freilaufdiode 6 aufweisenden Freilaufzweig 1 des induktiven Verbrauchers 3, welcher ein Gleichstrommotos sein kann, ein beim Verpolen in einen hochohmigen Zustand steuerbares Halbleiterbauelement 2 geschaltet. Im Freilaufzweig 1 ist das Halbleiterbauelement 2 in Reihe zur Freilaufdiode 6 geschaltet. Bei normalem Betrieb des Verbrauchers 3 befindet sich das Halbleiterbaulement 2, welches ein MOS-Feldeffekttransistor oder bipolarer Transistor sein kann, in seinem niederohmigen leitfähigen Zustand, so daß der Laststrom beim jeweiligen Abschalten des Laststromschalters 4 nicht plötzlich zu Null wird, sondern über den Freilaufzweig 1 weiter fließt.

Im Falle eines Verpolens der Versorgungsspannung Ubat wird das Halbleiterbauelement 2 in der Weise angesteuert, daß es in einen hochohmigen Zustand kommt. Dies kann beispielsweise durch die verpolte Versorgungsspannung geschehen, welche über einen Widerstand 7 die Steuerelektrode (Gate) des Halbleiterbauelementes 2 ansteuert. Da die Source-Drain-Strecke hochohmig ist, fließt beim Verpolen der Versorgungspannung der Strom über den Verbraucher 3 und den Laststromschalter 4 rückwärts zu Ubat- , welche im Normalfall Ubat+ ist. Hierdurch wird die elektronische Einrichtung 5 vor der negativen Spannung geschützt.

Im normalen Betrieb wird die elektronische Einrichtung 5 ebenfalls von der Versorgungsspannung Ubat versorgt. Hierzu ist die elektronisch Einrichtung 5 über die Source-Drain-Strecke des Halbleiterbauelements 2 mit Ubat- verbunden.

Die Anschlußstelle der elektronischen Einrichtung 5 befindet ich dabei zwischen der Freilaufdiode 6 und dem Halbleiterbauelement 2 im Freilaufzweig 1.

Durch eine Zenerdiode 10 kann das Gate des Halbleiterbauelementes 2 nach seiner Source geschützt werden.

Beim dargestellten Ausführungsbeispiel wird durch eine Diode 9 und eine Zenerdiode 8, welche mit dem Gate des Halbleiterbauelementes verbunden sind, der Verpolschutz bei einer definiert hohen negativen Spannung wieder leitfähig, wodurch Störspitzen während des Verpolens, beispielsweise durch induktive Schaltvorgänge, begrenzt und in Wärmeleistung umgesetzt werden. Bei den hohen Spannungsspitzen wird die Zenerdiode 8 im Durchbruch betrieben und die negative Spannung in einer solchen Größenordnung gehalten, dass sie die Elektronik nicht schädigt. Spannungsspitzen richten daher keine Schäden in der Elektronik an.

### [Bezugszeichenliste]

- 1: Freilaufzweig
- 2: Halbleiterbauelement
- 3: induktiver Verbraucher
- 4: Laststromschalter
- 5: elektronische Einrichtung
- 6: Freilaufdiode
- 7: ohmscher Widerstand
- 8: Zenerdiode
- 9: Diode
- 10: Zenerdiode

## Patentansprüche

1. Elektrische Schaltung zum Schutz einer an eine Gleichspannungsquelle (Ubat) angeschlossenen elektronischen Einrichtung (5) beim Verpolen der Gleichspannungsquelle, mit
- einem beim Verpolen in einen hochohmigen Zustand steuerbaren Bauelement (2), wobei das Bauelement (2) parallel zu einem von der Gleichspannungsquelle über einen Laststromkreis versorgten Verbraucher (3) geschaltet ist, sodass beim Verpolen der Strom zumindest teilweise über den Verbraucher (3) und den Laststromkreis fließt,
**dadurch gekennzeichnet, dass**
- mit dem Gate des Bauelements (2) eine Zenerdiode (8) über gegebenenfalls eine Diode (9) verbunden ist, sodass im verpolen Zustand oberhalb einer bestimmten hohen negativen Spannung das Bauelement (2) in den niederohmigen Zustand steuerbar ist.

2. Elektrische Schaltung nach Anspruch 1, **dadurch gekennzeichnet, dass** der Verbraucher (3) extern oder intern induktiv beeinflusst ist.

3. Elektrische Schaltung nach Anspruch 1 oder 2, **dadurch gekennzeichnet, dass** das als steuerbarer Schalter ausgebildete Bauelement (2) in einem Freilaufzweig (1) des induktiven Verbrauchers (3) liegt.

4. Elektrische Schaltung nach einem der Ansprüche 1 bis 3, **dadurch gekennzeichnet, dass** das in den hochohmigen Zustand steuerbare Bauelement (2) ein Halbleiterbauelement ist.

5. Elektrische Schaltung nach einem der Ansprüche 1 bis 4, **dadurch gekennzeichnet, dass** das Bauelement (2) als bipolarer Transistor oder MOS-Feldeffekttransistor ausgebildet ist.

6. Elektrische Schaltung nach einem der Ansprüche 1 bis 5, **dadurch gekennzeichnet, dass** die elektronische Einrichtung (5) zur Drain-Source-Strecke des Bauelements (2) in Reihe geschaltet ist.

7. Elektrische Schaltung nach einem der Ansprüche 1 bis 6, **dadurch gekennzeichnet, dass** der Freilaufzweig (1) eine mit der Drain-Source-Strecke des Bauelements (2) in Reihe geschaltete Freilaufdiode (6) aufweist und dass die Verbindungsstelle mit der elektrischen Einrichtung (5) zwischen der Freilaufdiode (6) und dem Bauelement (2) liegt.

8. Elektrische Schaltung nach einem der Ansprüche 1 bis 7, **dadurch gekennzeichnet, dass** das Bauelement (2) durch die verpolte Gleichspannungsquelle (Ubat) in den hochohmigen Zustand gesteuert ist.

## Claims

1. An electrical circuit for protecting an electronic device (5) connected to a DC power supply (Ubat) upon inverted polarity of the DC power supply, comprising
- a component (2) which can be switched into a high-impedance state upon inverted polarity, said component (2) being connected in parallel to a load (3) which is supplied with power by the DC power supply via a load circuit, such that the current flows at least partially via the load (3) and the load circuit upon reverse polarity,
**characterised in that**
- a Zener diode (8) is connected to the gate of the component (2) via a diode (9), if necessary, such that the component (2) can be switched into the low-impedance state in the event of a reverse polarity exceeding a specified high negative voltage.

2. The electrical circuit according to claim 1, **characterised in that** the load (3) is affected externally or internally by induction.

3. The electrical circuit according to claim 1 or 2, **characterised in that** the component (2) in the form of a controllable switch is located in a freewheeling branch (1) of the inductive load (3).

4. The electrical circuit according to any one of claims 1 to 3, **characterised in that** the component (2) which can be switched into the high-impedance state is a semiconductor component.

5. The electrical circuit according to any one of claims 1 to 4, **characterised in that** the component (2) is designed as a bipolar transistor or as a MOS fieldeffect transistor.

6. The electrical circuit according to any one of claims 1 to 5, **characterised in that** the electronic device (5) is connected in series to the drain-source path of the component (2).

7. The electrical circuit according to any one of claims 1 to 6, **characterised in that** the freewheeling branch (1) includes a freewheeling diode (6) connected in series to the drain-source path of the component (2) and that the point of connection to the electrical device (5) is located between the freewheeling diode (6) and the component (2).

8. The electrical circuit according to any one of claims 1 to 7, **characterised in that** the component (2) is switched into the high-impedance state by the reverse-polarity DC power supply (Ubat).

## Revendications

1. Circuit électrique de protection d'un dispositif (5) électronique relié à une source (Ubat) de tension continue, s'il se produit une inversion de polarité de la source de tension continue, comprenant
- un composant (2) pouvant être mis dans un état de grande valeur ohmique, le composant (2) étant monté en parallèle à un utilisateur (3) alimenté par la source de tension continue par l'intermédiaire d'un circuit de charge, de manière à ce que, s'il se produit une inversion de polarité, le courant passe au moins en partie par l'utilisateur (3) et par le circuit de charge,
**caractérisé en ce que**
- une diode (8) zener est reliée à la grille du composant (2), le cas échéant par l'intermédiaire d'une diode (9), de manière à ce que, à l'état d'inversion de polarité, le composant (2) peut, au-dessus d'une haute tension négative déterminée, être mis dans l'état d'une valeur ohmique petite.

2. Circuit électrique suivant la revendication 1, **caractérisé en ce que** l'utilisateur (3) est influencé par induction extérieurement ou intérieurement.

3. Circuit électrique suivant la revendication 1 ou 2, **caractérisé en ce que** le composant (2), constitué en commutateur pouvant être commandé, se trouve dans une branche (1) de roue libre de l'utilisateur (3) inductif.

4. Circuit électrique suivant l'une des revendications 1 à 3, **caractérisé en ce que** le composant (2) pouvant être mis dans l'état de grande valeur ohmique est un composant à semiconducteur.

5. Circuit électrique suivant l'une des revendications 1 à 4, **caractérisé en ce que** le composant (2) est constitué sous la forme d'un transistor bipolaire ou d'un transistor à effet de champ MOS.

6. Circuit électrique suivant l'une des revendications 1 à 5, **caractérisé en ce que** le dispositif (5) électronique est monté en série avec la section de drain-source du composant (2).

7. Circuit électrique suivant l'une des revendications 1 à 6, **caractérisé en ce que** la branche (1) de roue libre a une diode (6) de roue libre montée en série avec la zone de drain-source du composant (2) et **en ce que** le point de liaison au dispositif (5) électrique se trouve entre la diode (6) de roue libre et le composant (2).

8. Circuit électrique suivant l'une des revendications 1 à 7, **caractérisé en ce que** le composant (2) est mis dans l'état de grande valeur ohmique par la source (Ubat) de tension dont la polarité est inversée.
